# EUROPEAN PATENT APPLICATION

(11) **EP 2 166 693 A2**
(43) Date of publication of application: **24.03.2010**
(21) Application number: 09170954.3
(22) Date of filing: 22.09.2009
(51) Int. Cl.: H04L 1/18

(54) **Method and device for suspending data**

(30) Priority: 23.09.2008 CN 200810211770
(71) Applicant: Huawei Technologies Co., Ltd., Longgang District Shenzhen Guangdong 518129 (CN)
(72) Inventor: Shao, Fei, 518129, Shenzhen (CN)
(74) Representative: Epping, Wilhelm

(57) **Abstract**

The present invention relates to telecommunication technologies, and provides a method and a device for suspending data to perform effective data suspension in an Evolved UMTS Terrestrial Radio Access Network (EUTRAN) system. In the method, the lower layer performs re-establishment; the upper layer sends data to the lower layer after completion of the re-establishment; and the upper layer suspends the data of the data link or instructs the lower layer to suspend the data of the data link after a data suspension is triggered. The technical solution under the present invention is widely applicable to the EUTRAN system, in which data suspension can be performed according to characters of different protocol layers, and sending of data control can be effectively.

## Description

### FIELD OF THE INVENTION

The present invention relates to telecommunication technologies, and in particular, to a method and a device for suspending data in an Evolved Universal Mobile Telecommunications System (UMTS) Terrestrial Radio Access Network (EUTRAN) system.

### BACKGROUND

In an EUTRAN system, a User Equipment (UE) interacts with a NodeB through a Uu radio interface. The Uu radio interface includes a physical layer, a data link layer, and a network layer. The data link layer may be subdivided into a Media Access Control (MAC) layer, a Radio Link Control (RLC) layer, and a Packet Data Convergence Protocol (PDCP) layer.

Each sub-layer interface of the data link layer has a Service Access Point (SAP). The SAP between the physical layer and the MAC layer provides a transmission channel, and the SAP between the MAC layer and the RLC layer provides a logical channel. Multiple logical channels may be mapped to a same transmission channel. For a control plane, the interface between the PDCP layer and the RRC layer is a Radio Bearer (RB). For a user plane, the interface between the PDCP layer and upper layers (such as core network) is a Radio Access Bearer (RAB).

In a UMTS Terrestrial Radio Access Network (UTRAN) system, the prior art related to the present invention includes the following method of suspending data:

The upper layer (such as a PDCP layer) sends data (such as PDCP Protocol Data Unit, i.e., RLC Service Data Unit) to the lower layer.

An RLC Service Data Unit (PDU) is formed after the RLC layer performs segmentation and concatenation of the upper layer data (such as PDCP layer), where each PDU has a sequence number; and the RLC layer sends the RLC PDU to the MAC layer.

When the RLC layer receives a suspension indication from the upper layer (such as RRC layer), the RLC layer stops sending the data (PDU) subsequent to N sequence numbers, i.e., suspending the data of the RLC layer.

When receiving a recovery instruction, the RLC layer resumes sending data to the MAC layer.

The inventor finds at least the following technical problems in the prior art: In some scenarios, such as a process of setting up an RRC connection in the EUTRAN system, protocol layer re-establishment may be triggered. Because of no protocol layer re-establishment in UTRAN system, when the method of suspending data in UTRAN system aforementioned is employed into the EUTRAN system, and the RLC layer performs re-establishment, the data of the RLC layer is cleared up completely (including the PDUs subsequent to N sequence numbers), and all states of variables are reset. After completion of protocol layer re-establishment, the RLC layer has no data to be sent. Therefore, data suspension on the RLC layer makes no sense. The method of suspending data in UTRAN system aforementioned, in which data suspension occurs on the RLC layer only, is not applicable to perform effective data suspension in the EUTRAN system.

### SUMMARY

A method and a device for suspending data are provided according to embodiments of the present invention to suspend data effectively in an EUTRAN system.

Such objectives of the present invention are fulfilled through the following technical solution:
A method for suspending data is provided according to one embodiment of the present invention. The method may include: A lower layer performs a protocol layer re-establishment; an upper layer sends data to the lower layer after completion of the re-establishment; and the upper layer suspends the data of the data link or instructing the lower layer to suspend the data of the data link after triggering the data suspension.
A device for suspending data is provided according to one embodiment of the present invention. The device may include: a lower layer module and an upper layer module.

The lower layer module is adapted to receive data from the upper layer module after completing re-establishment; receive a suspension instruction from the upper layer module and suspend the data of a data link according to the suspension instruction; recover data transmission of the data link after the data link recovers to normal or after a recovery instruction is received.

The upper layer module is adapted to send the data to the lower layer module; suspend the data of the data link or instruct the lower layer module to suspend the data of the data link after a data suspension is triggered; recover the data transmission of the data link after the data link recovers to normal or after the recovery instruction is received.

In the method and the device for suspending data according to embodiments of the present invention, after the lower layer (module) completes re-establishment, the upper layer (module) sends data to the lower layer (module) and then suspends the data of the data link or instructs the lower layer (module) to suspend the data of the data link when a data suspension is triggered. Different from the prior art, in which the data is sent first, then the protocol layer is re-established, and then the data is suspended; in the embodiments of the present invention, the protocol layer is re-established first, then the data is sent, and then the data is suspended according to characters of different protocol layers. Thus, the data suspension in the EUTRAN system is effective, the data sending control is effectively, and protocol errors caused by messy data sending can be avoided according to the solutions of the present invention.

### BRIEF DESCRIPTION OF THE DRAWINGS

In order to make the technical solution under the present invention or in the prior art clearer, the accompanying drawings for illustrating the embodiments of the present invention or illustrating the prior art are outlined below. Evidently, the accompanying drawings are for the exemplary purpose only, and those skilled in the art can derive other drawings from such accompanying drawings without making any creative effort.

FIG. 1 shows a flowchart of a method for suspending data according to an embodiment of the present invention; and

FIG. 2 shows a device for suspending data according to an embodiment of the present invention.

### DETAILED DESCRIPTION

The technical solution under the present invention is expounded below by reference to accompanying drawings. Evidently, the embodiments given herein are for the exemplary purpose only, and are not all of the embodiments of the present invention. Those skilled in the art can derive other embodiments from the embodiments given herein without making any creative effort, and all such embodiments are covered by the protection scope of the present invention.

In an EUTRAN system, when the lower layer, such as an RLC layer or a MAC layer, performs re-establishment, or when the upper layer, such as a PDCP layer or an RRC layer, or the lower layer receives a suspension instruction, or when a data link undergoes data congestion or security out-of-sync, data suspension is triggered, i.e., the sending of data is suspended. In the embodiments of the present invention, the lower layer may perform re-establishment when a UE initiates an RRC connection set-up and performs connection reconfiguration because of UE performing an access or initiating a call or initiating a handover; or because of a protocol layer error. The term of data link in the present invention may be one or more RBs between a PDCP layer and an RRC layer or between a PDCP layer and a layer which is higher than the RRC layer; or may be one or more logical channels between an RLC layer and a MAC layer. In this way, the protocol errors caused by messy sending of data can be avoided. After the re-establishment is completed, or when the data link recovers to normal, or after a recovery instruction is received; the data transmission is recovered.

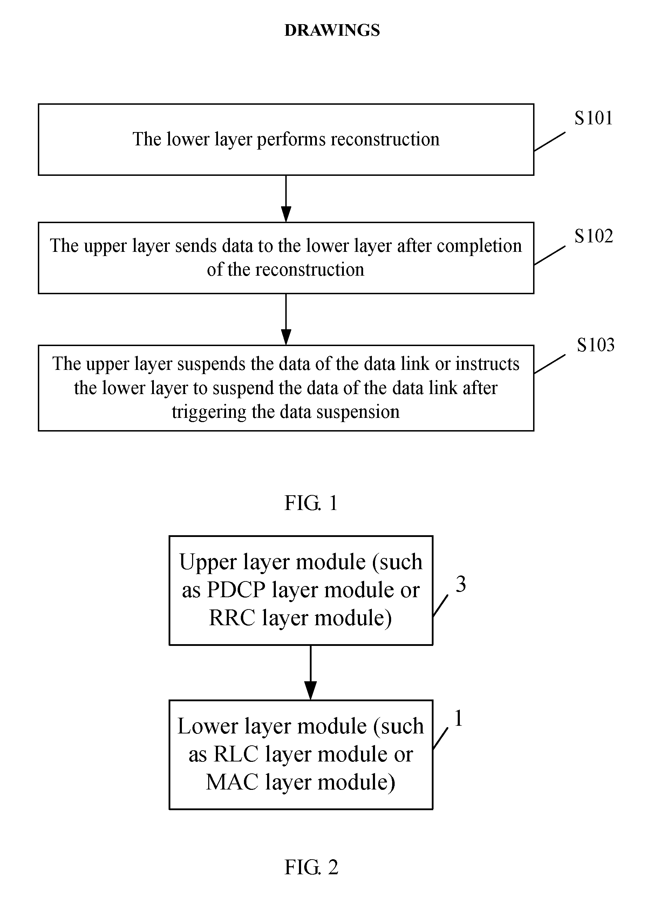

In order to perform data suspension effectively in an EUTRAN system, a method for suspending data is provided in an embodiment of the present invention. As shown in FIG. 1, the method includes the following steps:
S101: The lower layer performs re-establishment.
S102: The upper layer sends data to the lower layer after completion of the re-establishment.
S103: The upper layer suspends the data of the data link or instructs the lower layer to suspend the data of the data link after a data suspension is triggered.

In step S103, data suspension may occur on different protocol layers according to characters of the protocol layer. The modes of data suspension include:
Mode 1: Data suspension occurs on the PDCP layer, i.e., the PDCP layer suspends sending of the data of the RB(s). The RB(s) may be singular or plural (including all RBs when re-establishment occurs on the protocol layer).

For example, when data congestion occurs on an RB(s), or when security is out of synchronization, or when the PDCP layer receives a suspension instruction, or when re-establishment occurs on the RLC, the PDCP layer suspends sending of the data of the RB, i.e., the PDCP layer performs data suspension. According to one embodiment of the present invention, when the UE receives a request of RRC connection set-up or the network regards it necessary to perform RRC connection set-up, the UE triggers the RLC layer to perform protocol layer re-establishment after the UE receives an RRC Connection Set-up request from the network.

When the RB recovers to normal, or when receiving a recovery instruction, or when the RLC layer completes re-establishment, the PDCP layer recovers the data transmission of the RB. According to one embodiment of the present invention, the RLC layer completes re-establishment when the UE sends an RRC Connection Reconfiguration Complete message to the EUTRAN, or when the EUTRAN receives an RRC Connection Reconfiguration Complete message. In the method for suspending data according to one embodiment of the present invention, when the data of one RB is suspended, other RB(s) are not affected.

Mode 2: The PDCP layer or the RRC layer instructs the RLC layer to suspend data. The RLC layer suspends sending of the data of logical channel(s). The logical channel(s) may be singular or plural (including all logical channels at the time of re-establishment).

For example, when data congestion occurs on the logical channel(s), or when the security is out of synchronization, or when the RLC layer receives a suspension instruction from the PDCP layer or the RRC layer, or when re-establishment occurs on the RLC, the PDCP sends data to the RLC layer, and the PDCP layer or the RRC layer notifies the RLC layer to suspend data. The RLC layer buffers the data sent from the PDCP layer, and suspends sending of the data of the logical channel.

When the logical channel(s) recovers to normal or receiving a recovery instruction, or when the RLC layer completes re-establishment, the RLC layer recovers data transmission on the logical channel(s). In the method for suspending data in one embodiment of the present invention, when the data of a one logical channel is suspended, the data transmission of other logical channel(s) is not affected.

Mode 3: The PDCP layer or the RRC layer instructs the MAC layer to suspend data. The MAC layer suspends the data of the logical channel(s) by means of not allocating resource to the logical channel(s). The logical channel(s) may be singular or plural (including all logical channels at the time of re-establishment).

For example, when data congestion occurs on the logical channel(s), or when security is out of synchronization, or when the RLC layer receives a suspension instruction from the PDCP layer or the RRC layer, or when re-establishment occurs on the RLC, the PDCP sends data to the RLC layer, and the PDCP layer or the RRC layer notifies the MAC layer to suspend data. The MAC layer buffers the data sent from the PDCP layer, and restricts resource, for example, not allocating resource, on the logical channel. In this way, the data service of the corresponding logical channel is suspended.

When the logical channel(s) recovers to normal or receiving a recovery instruction, or when the RLC layer completes re-establishment, the MAC layer cancels resource restriction on the logical channel and recovers data transmission on the logical channel.

The functions of the MAC layer include: mapping from the logical channel to the transmission channel; selecting a proper transmission format for each transmission channel according to the transient source rate; priority scheduling; multiplexing and de-multiplexing; traffic monitoring; and switching the channel type according to the upper-layer instruction. The MAC layer multiplexes the data of different logical channels sent from the RLC layer, and sends the data to the physical layer. The MAC layer may perform resource restriction on the data of the logical channel by not allocating transmission channel mapped by the logical channel or not sending service data to the transmission channel or restricting the service traffic to zero. In the method for suspending data in one embodiment of the present invention, when the data of one logical channel is suspended, the data transmission of other logical channel(s) is not affected.

Through the method for suspending data according to embodiments the present invention, after the lower layer completes re-establishment, the upper layer sends data to the lower layer and then suspends the data of the data link or instructs the lower layer to suspend the data of the data link when a data suspension is triggered. Different from the prior art, in which the data is sent first, then the protocol layer is re-established, and then the data is suspended; in the embodiments of the present invention, the protocol layer is re-established first, then the data is sent, and then the data is suspended according to characters of different protocol layers. Thus, the data suspension in the EUTRAN system is effective, the data sending control is effectively, and protocol errors caused by messy data sending can be avoided.

In order to perform data suspension effectively in an EUTRAN system, a device for suspending data is provided according to an embodiment of the present invention. As shown in FIG. 2, the device includes a lower module 1 and an upper layer module 3.

The lower layer module 1 is adapted to receive data from the upper layer module 3 after completing re-establishment; receive a suspension instruction from the upper layer module 3, and suspend the data of a data link according to the suspension instruction; and recover data transmission of the data link after the data link recovers to normal or after a recovery instruction is received.

The upper layer module 3 is adapted to send the data to the lower layer module 1; suspend the data of the data link or instruct the lower layer module 1 to suspend the data of the data link after the data suspension is triggered; and recover the data transmission of the data link after the data link recovers to normal or after the recovery instruction is received.

The upper layer module 3 may be a PDCP layer module or an RRC layer module, and the lower layer module 1 may be an RLC layer module or a MAC layer module. The data link includes one or more RBs between the PDCP layer module and the RRC layer module or between the PDCP layer module and a layer module which is higher than the RRC layer module, and one or more logical channels between the RLC layer module and the MAC layer module. The PDCP layer module may suspend data of an RB according to the suspension instruction of the RRC layer module according to one embodiment of the present invention. The RLC layer module may suspend a logical channel according to the suspension instruction of the PDCP layer module or the RRC layer module according to another embodiment of the present invention. The MAC layer module may restrict resource allocated to the logical channel according to the suspension instruction of the PDCP layer module or the RRC layer module to suspend the data of the logical channel according to another embodiment of the present invention. When the MAC layer module performs data suspension, the data sent by the PDCP layer module is buffered in the RLC layer module. When re-establishment occurs on the RLC layer module, the buffer of the RLC layer module is cleared, and the data is buffered in the PDCP layer module.

The device for suspending data under the present invention may be a subscriber-side device or a network-side device (for example, eNodeB) in the EUTRAN system. After the lower layer module 1 completes re-establishment, the upper layer module 3 sends data to the lower layer module 1 and triggers a data suspension, and then the upper layer module 3 suspends the data of the data link or instructs the lower layer module 1 to suspend the data of the data link. In this way, the data suspension in the EUTRAN system is ensured to be effective, the sending of the data is controlled effectively, and protocol errors caused by messy sending of data can be avoided.

Although the invention has been described through some preferred embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for suspending data, comprising:
performing, by a lower layer, re-establishment;
sending, by an upper layer, data to the lower layer after completion of the re-establishment; and
suspending, by the upper layer, the data of a data link or instructing the lower layer to suspend the data of the data link after a data suspension is triggered.

2. The method for suspending data according to claim 1, wherein
the data link comprises one or more radio bearers, RBs, between a Packet Data Convergence Protocol, PDCP, layer and a Radio Resource Control, RRC, layer or between the PDCP layer and a layer which is higher than the RRC layer; and
one or more logical channels between a Radio Link Control, RLC, layer and a Media Access Control, MAC, layer.

3. The method for suspending data according to claim 1, wherein
the data suspension is triggered when the lower layer performs the re-establishment, or when the upper layer or the lower layer receives the instruction of suspension, or when the data link undergoes data congestion or security out-of-synchronization.

4. The method for suspending data according to any one of claims 1-3, wherein
the upper layer is a PDCP layer or an RRC layer; and
the lower layer is a MAC layer or an RLC layer.

5. The method for suspending data according to claim 4, wherein the suspending, by the upper layer the data link comprises:
suspending, by the PDCP layer, sending of the data of an RB.

6. The method for suspending data according to claim 4, wherein the instructing, by
the upper layer, the lower layer to suspend the data of the data link comprises:
sending, by the PDCP layer, the data to the RLC layer;
notifying, by the PDCP layer or the RRC layer, the MAC layer to suspend the data; and
restricting, by the MAC layer, resource when allocating resource to a logical channel of the RLC layer.

7. The method for suspending data according to claim 4, wherein the instructing, by
the upper layer, the lower layer to suspend the data of the data link comprises:
sending, by the PDCP layer, the data to the RLC layer;
notifying, by the PDCP layer or the RRC layer, the RLC layer to suspend the data; and
suspending, by the RLC layer, sending of the data of a logical channel.

8. A device for suspending data, comprising:
a lower layer module, which is adapted to receive data from an upper layer module after completing re-establishment; receive a suspension instruction from the upper layer module and suspend the data of a data link according to the suspension instruction; and recover data transmission of the data link after the data link recovers to normal or after a recovery instruction is received; and
the upper layer module, which is adapted to send the data to the lower layer module; suspend the data of the data link or instruct the lower layer module to suspend the data of the data link after a data suspension is triggered; and recover the data transmission of the data link after the data link recovers to normal or after the recovery instruction is received.

9. The device for suspending data according to claim 8, wherein:
the upper layer module is a Packet Data Convergence Protocol, PDCP, layer module or a Radio Resource Control, RRC, layer module; and
the lower layer module is a Radio Link Control, RLC, layer module or a Media Access Control, MAC, layer module.

10. The device for suspending data according to claim 9, wherein the data link comprises:
one or more radio bearers, RBs, between the PDCP layer module and the RRC layer module or between the PDCP layer module and a layer module which is higher than the RRC layer module; and
one or more logical channels between the RLC layer module and the MAC layer module.
